# EUROPÄISCHE PATENTSCHRIFT

(11) **EP 1 625 053 B1**
(45) Veröffentlichungstag und Bekanntmachung des Hinweises auf die Patenterteilung: **04.07.2007**
(21) Anmeldenummer: 04729605.8
(22) Anmeldetag: 27.04.2004
(51) Int. Cl.: B60R 21/13, F41H 7/00

(54) **MILITÄRISCHES KRAFTFAHRZEUG ZUM MANNSCHAFTSTRANSPORT**
MILITARY MOTOR VEHICLE FOR TRANSPORTING PERSONNEL
AUTOMOBILE MILITAIRE POUR TRANSPORT DE TROUPES

(30) Priorität: 22.05.2003 DE 10323076
(43) Veröffentlichungstag der Anmeldung: 15.02.2006
(73) Patentinhaber: Krauss-Maffei Wegmann GmbH & Co. KG, 80997 München (DE)
(72) Erfinder: HEPNER, Eugen, 81737 München (DE); REISNER, Susanne, 85232 Kreuzholzhausen (DE); SCHLEGL, Eugen, 82194 Gröbenzell (DE); WITTMANN, Christoph, 85221 Dachau (DE)
(74) Vertreter: Feder, Wolf-Dietrich
(86) Internationale Anmeldenummer: PCT/DE2004/000873
(87) Internationale Veröffentlichungsnummer: WO 2004/108485

(56) Entgegenhaltungen:
- DE-A- 3 516 671
- US-A- 4 188 060
- US-B1- 6 471 280

## Beschreibung

Die Erfindung betrifft ein militärisches Kraftfahrzeug zum Mannschaftstransport mit einem Fahrgestell, auf dem hintereinander eine Fahrerkabine und ein nach oben offener, mit einer Plane abdeckbarer Transportaufbau zur Aufnahme einer Mannschaft angeordnet sind, wobei im Transportaufbau mehrere Sitze und/oder Sitzbänke angeordnet sind und an der Oberseite des Transportaufbaus eine Überroll-Schutzeinrichtung angeordnet ist.

Aus der US 4 188 060 ist eine Militärisches Kraftfahrzeug zum Mannschaftstransport mit einem Fahrgestell bekannt, auf dem hintereinander eine Fahrerkabine und ein nach oben offener, abdeckbarer Transportaufbau zur Aufnahme einer Mannschaft angeordnet sind, wobei im Transportaufbau mehrer Sitzbänke angeordnet sind.

Aus der US 6 471 280 ist eine Kraftfahrzeug mit einem Fahrgestell bekannt, auf dem ein nach oben offener mit einer Plane abdeckbarer Transportaufbau angeordnet ist, und an der Oberseite des Transportaufbau eine Überroll-Schutzeinrichtung angeordnet ist, wobei die beiden Enden des Überrollbügel lösbar mit dem Transportaufbau verriegelt sind.

Bei militärischen Einsätzen im internationalen Bereich ist es von zunehmender Wichtigkeit, dass militärische Kraftfahrzeuge zur Verfügung stehen, die aufgrund ihres Leergewichtes und ihrer Außenabmessungen in mittelgroßen Flugzeugen, insbesondere in Hubschraubern, transportiert werden können. Der Erfindung liegt die Aufgabe zugrunde, ein militärisches Kraftfahrzeug mit den oben angegebenen Merkmalen so auszugestalten, dass es mit wenigen Handgriffen in einen Verladungszustand gebracht werden kann, in dem insbesondere seine Höhe das zulässige Verlademaß nicht überschreitet.

Die Lösung dieser Aufgabe erfolgt erfindungsgemäß dadurch, dass die Überroll-Schutzeinrichtung zwei jeweils über einer Seitenwand des Transportaufbaus angeordnete, sich in Längsrichtung über die gesamte Länge des Transportaufbaus erstreckende Überrollbügel aufweist, wobei die beiden Enden jedes Überrollbügels lösbar mit dem Transportaufbau verriegelt sind und die beiden Überrollbügel durch quer zur Längsrichtung verlaufende Versteifungselemente miteinander verbunden sind.

Vorteilhafte Weiterbildungen der Erfindung sind weiter unten beschrieben.

Da die Gesamthöhe des militärischen Kraftfahrzeugs im wesentlichen durch die an der Oberseite des Transportaufbaus angeordnete Überroll-Schutzeinrichtung bestimmt ist, besteht ein Grundgedanke der Erfindung darin, diese Überroll-Schutzeinrichtung so auszugestalten, dass sie nach Lösen von Verriegelungsvorrichtungen rasch aus der erhöhten Arbeitsposition in eine erniedrigte Verladeposition bewegt und insbesondere in diese Position herabgeschwenkt werden kann. Zu diesem Zweck besitzt die Überroll-Schutzeinrichtung zwei sich in Längsrichtung des Transportaufbaus erstreckende Bügel, die durch quer zur Längsrichtung verlaufende Versteifungselemente miteinander verbunden sind. An ihren jeweiligen Enden sind die Überrollbügel lösbar mit dem Transportaufbau verriegelt. Auf diese Weise ist es möglich, beispielsweise die gesamte Überroll-Schutzeinrichtung nach Lösen der Verriegelungen rasch abzubauen und in einer abgesenkten Position anzuordnen. Wie weiter unten anhand eines Ausführungsbeispiels näher erläutert, ist es bei einer besonders vorteilhaften Ausführungsform der Überroll-Schutzeinrichtung möglich, die Überrollbügel nach dem Lösen der Verriegelungen aus der erhöhten Arbeitsposition in eine niedrigere Verladeposition herabzuschwenken.

Zur Gewichtseinsparung hat es sich weiterhin als vorteilhaft erwiesen, wenn in die Querversteifungen der Überroll-Schutzeinrichtung mindestens ein Teil der Rückenlehnen der Sitze bzw. der Sitzbänke mit ihren Nackenstützen integriert sind. Weiterhin hat es sich als vorteilhaft erwiesen, wenn auch die Fahrerkabine in einen Verladezustand gebracht werden kann, indem sie eine geringere Höhe einnimmt. Dies kann dadurch erreicht werden, dass die Fahrerkabine eine Dachhaube besitzt, die um an der Rückwand der Fahrerkabine angeordnete Scharniere um mindestens 180° nach hinten zwischen die Bordwände des Transportaufbaus wegklappbar ist.

Es hat sich gezeigt, dass es mit den Maßnahmen nach der vorliegenden Erfindung möglich ist, das militärische Kraftfahrzeug in einen Hubschrauber beispielsweise vom Typ CH 53 zu verladen.

Im folgenden wird anhand der beigefügten Zeichnungen ein Ausführungsbeispiel für das militärische Kraftfahrzeug nach der Erfindung näher erläutert.

In den Zeichnungen zeigen:
- Fig. 1: ein militärisches Kraftfahrzeug in einer teilweise geschnittenen Seitenansicht;

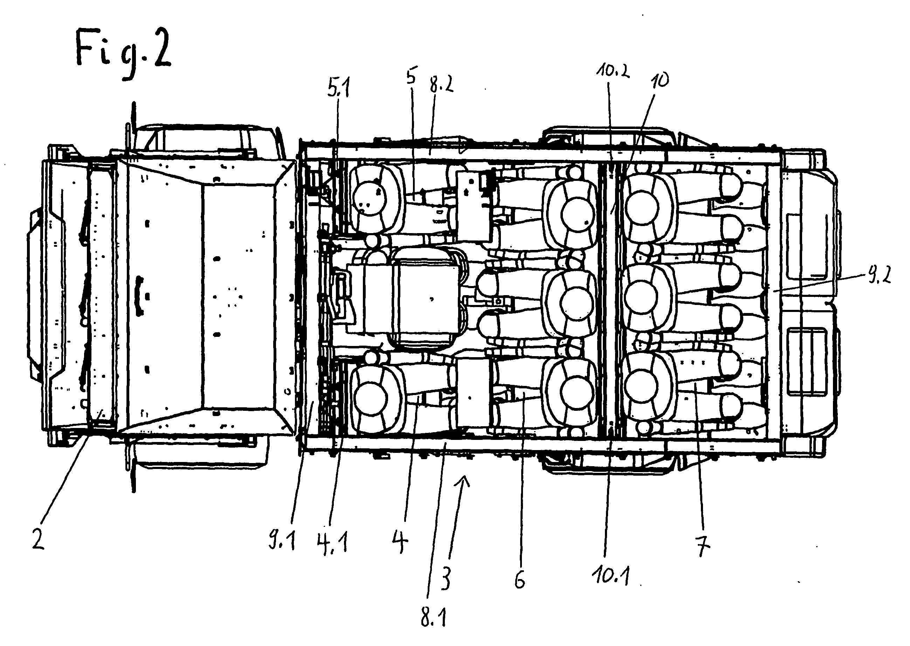

- Fig. 2: das militärische Kraftfahrzeug nach Fig. 1 in einer Ansicht von oben bei abgenommener Plane;

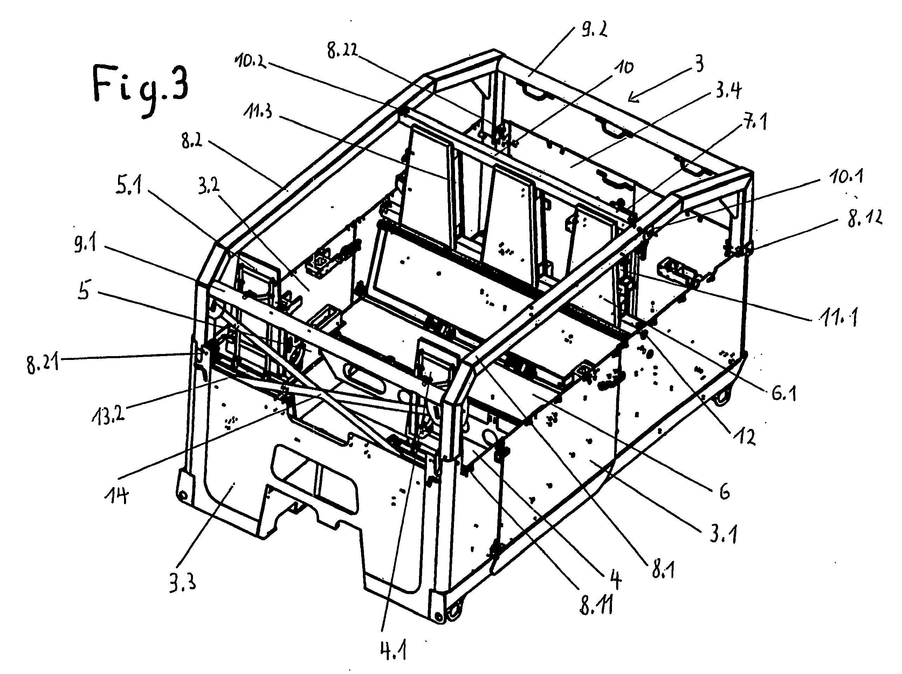

- Fig. 3: in einer perspektivischen Darstellung den Transportaufbau des militärischen Kraftfahrzeugs nach Fig. 1 und 2;

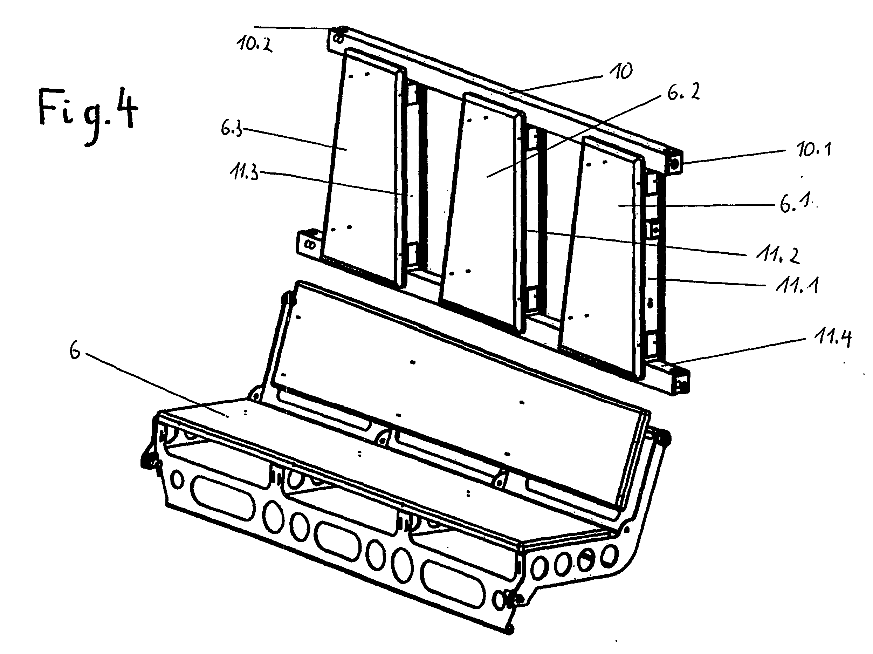

- Fig. 4: in einer perspektivischen Einzeldarstellung die mittlere Mannschaftssitzbank des Transportaufbaus nach Fig. 3;

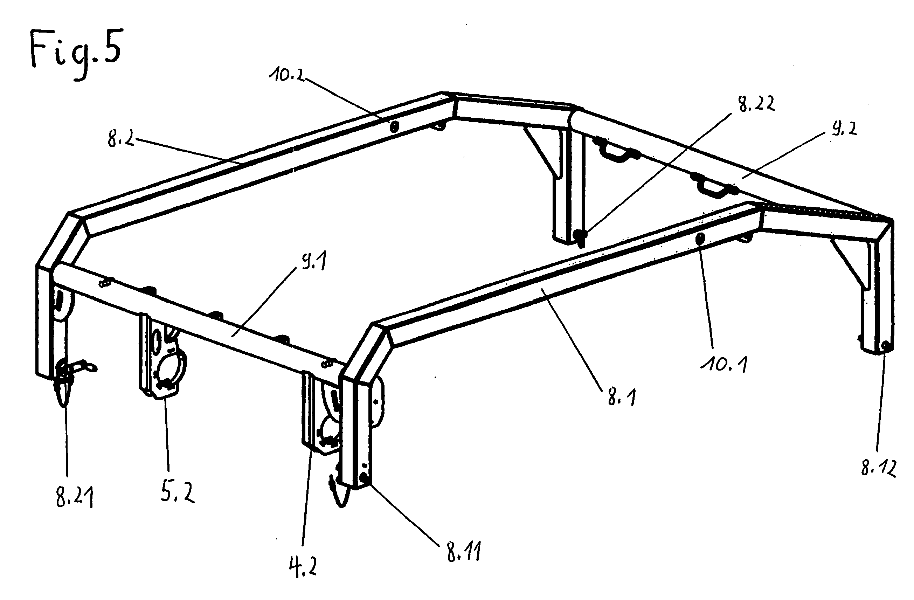

- Fig. 5: in perspektivischer Einzeldarstellung die Überrollbügel des Transportaufbaus nach Fig. 3;
- Fig. 6A-6D: in einer verkleinerten Seitenansicht das militärische Kraftfahrzeug nach Fig. 1 bis 5 in verschiedenen Phasen des Umrüstens zur Verladefähigkeit;
- Fig. 7: das militärische Kraftfahrzeug nach Fig. 1 bis 6 im in einen Hubschrauber vom Typ CH 53 verladenen Zustand.

Das in den Zeichnungen dargestellte militärische Kraftfahrzeug ist für den Mannschaftstransport gedacht und besitzt ein Fahrgestell 1, auf dem vorne eine Fahrerkabine 2 und hinter dieser Fahrerkabine ein nach oben offener und mit einer nicht dargestellten Plane abdeckbarer Transportaufbau 3 zur Aufnahme einer Mannschaft angeordnet sind. Innerhalb des Transportaufbaus 3 sind im vorderen Teil zwei Einzelsitze 4 und 5 entgegen der Fahrtrichtung angeordnet. Im mittleren Bereich ist hinter den Einzelsitzen 4 und 5 eine Sitzbank 6 zur Aufnahme von 3 Personen, die in Fahrtrichtung schauen, angeordnet, und im hinteren Bereich befindet sich hinter der Sitzbank 6 eine weitere Sitzbank 7 zur Aufnahme von weiteren drei Personen der Mannschaft, die entgegengesetzt zur Fahrtrichtung schauen. Die Einzelsitze 4 und 5 besitzen Rückenlehnen mit um horizontale Schwenkachsen 13.1, 13.2 schwenkbaren Oberteilen 4.1 und 5.1. Die Sitzbänke 6 und 7 besitzen Rückenlehnen mit um eine horizontale Achse 12 schwenkbaren, beiden Sitzbänken gemeinsamen Oberteilen 6.1 bis 6.3.

An der Oberseite des Transportaufbaus 3 ist eine Überroll-Schutzeinrichtung angeordnet, die zwei jeweils über einer Seitenwand 3.1 bzw. 3.2 des Transportaufbaus 3 angeordnete und sich in Längsrichtung des Transportaufbaus über dessen gesamte Länge erstreckende Überrollbügel 8.1 und 8.2 aufweist. Die Überrollbügel 8.1 und 8.2 sind jeweils an beiden Enden über Verriegelungseinrichtungen 8.11 und 8.12 bzw. 8.21 und 8.22 lösbar mit dem Transportaufbau 3 verriegelt. Quer zur Längsrichtung sind die beiden Überrollbügel 8.1 und 8.2 durch Versteifungselemente miteinander verbunden. Ein erstes im Bereich der vorderen Enden der Überrollbügel angeordnetes Versteifungselement ist als fest mit den beiden Überrollbügeln 8.1 und 8.2 verbundene Querstrebe 9.1 ausgebildet, die über Befestigungselemente 4.2 bzw. 5.2 mit den Oberteilen 4.1 und 5.1 der Einzelsitze 4 und 5 verbunden ist. Im Bereich der hinteren Enden der Überrollbügel 8.1 und 8.2 ist ein zweites Versteifungselement angeordnet, das ebenfalls als fest mit den beiden Überrollbügeln 8.1 und 8.2 verbundene Querstrebe 9.2 ausgebildet und oberhalb der Rückwand 3.4 des Transportaufbaus 3 angeordnet ist.

Ein drittes Versteifungselement, das zwischen den fest mit den Überrollbügeln verbundenen Querstreben 9.1 und 9.2 angeordnet ist, besteht aus einer Querstrebe 10, die über Drehgelenke 10.1 und 10.2 mit den Überrollbügeln 8.1. und 8.2 verbunden ist. Diese Querstrebe 10 ist fest mit Schwingen 11.1 bis 11.3 verbunden, welche um die horizontal angeordnete gemeinsame Schwenkachse 12 schwenkbar sind. Dies wird im dargestellten Ausführungsbeispiel dadurch erreicht, dass die Schwingen 11.1 bis 11.3 in die Oberteile 6.1 bis 6.3 der Rükkenlehnen der Sitzbänke 6 und 7 integriert sind. Dabei ist die Anordnung so, dass die Schwingen 11.1 bis 11.3 zusammen mit den Oberteilen 6.1 bis 6.3 der Rückenlehnen um die Schwenkachse 12 aus einer verriegelbaren Position in eine verkippte Position schwenkbar sind. Diese Schwenkachsen liegen etwa auf halber Höhe des Transportaufbaus 3.

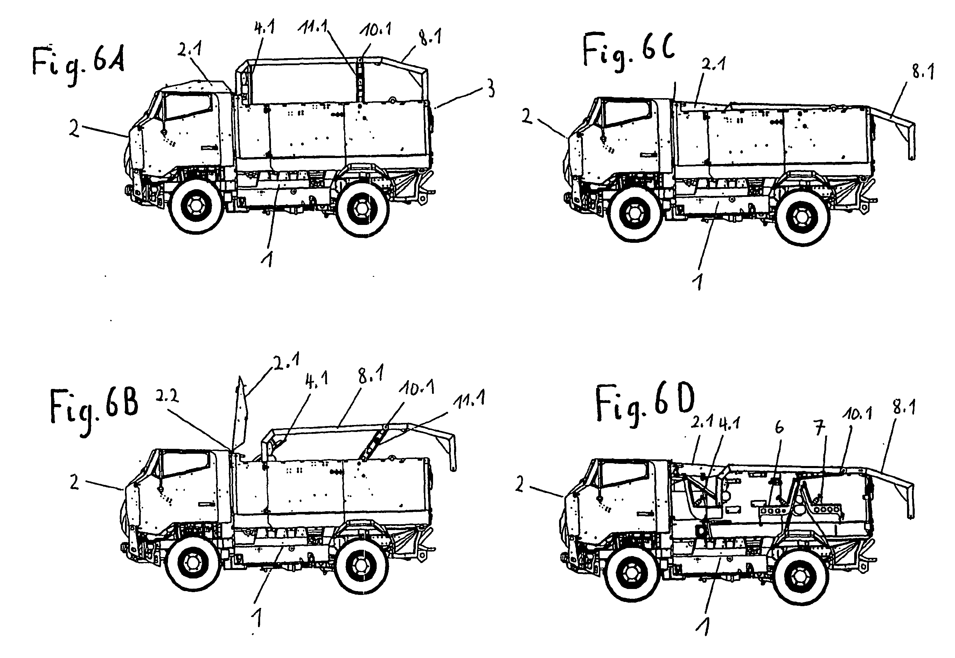

Aufgrund der oben beschriebenen Konstruktion sind die beiden Überrollbügel 8.1 und 8.2 nach Lösen der Verriegelungsvorrichtungen 8.11, 8.12, 8.21 und 8.22 aus der in Fig. 6A dargestellten Arbeitsposition nach hinten in eine tiefere Position schwenkbar, wobei eine Zwischenstellung in Fig. 6B und die Endstellung in Fig. 6C dargestellt ist. Fig. 6D zeigt die Gesamtanordnung der herabgeschwenkten Überrollbügel 8.1 und 8.2 und die Lage der sie tragenden Schwingen und der mit den Schwingen verbundenen Sitze bzw. Sitzteile. Zur weiteren Versteifung des mit den Überrollbügeln 8.1 und 8.2 versehenen Transportaufbaus 3 dienen Diagonalversteifungen. Eine derartige Diagonalversteifung ist beispielsweise an der Vorderwand 3.3 des Transportaufbaus 3 durch diagonal im Querschnitt des Transportaufbaus 3 geführte Seile 14 gebildet.

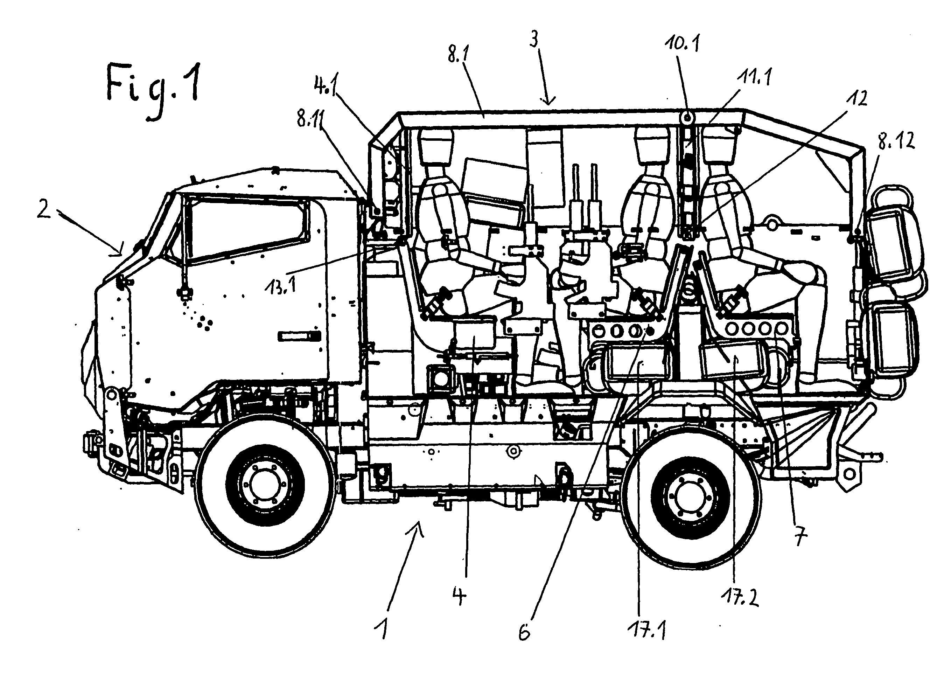

Zur weiteren Versteifung dienen auch die Rückenlehnen der Sitzbänke 6, 7 mit den in sie integrierten Nackenstützen. Die Sitze und Sitzbänke besitzen keine Befestigung zum Boden des Transportaufbaus 3 hin, und die Sitzbänke 6, 7 sind selbsttragend ausgebildet. Weiterhin sind, wie Fig. 1 zu entnehmen, die Sitzbänke so ausgestaltet, dass sie einen darunter befindlichen Stauraum begrenzen, so dass die in diesem Stauraum angeordneten Teile der Ladung 17.1 und 17.2 gegen Verrutschen gesichert sind.

Um auch im Bereich der Fahrerkabine 2 die Gesamthöhe des militärischen Kraftfahrzeugs auf das zulässige Verlademaß verkleinern zu können, besitzt die Fahrerkabine 2 eine Dachhaube 2.1, die um an der Rückwand der Fahrerkabine angeordnete Scharniere 2.2 um einen Winkel, der größer ist als 180°, nach hinten zwischen die Bordwände des Transportaufbaus 3 weggeklappt werden kann. Diese Möglichkeit ist ebenfalls in den Fig. 6A bis 6D dargestellt, wobei in Fig. 6B die Dachhaube 2.1 in einem teilweise nach hinten geklappten Zustand gezeigt ist. Zur Unterstützung der Öffnungs- und Schließbewegung der Dachhaube 2.1 dient in nicht dargestellter Weise eine Drehstabfeder, deren Vorspannung so eingestellt ist, dass sie bei einem Öffnungswinkel von ca. 90° der Dachhaube entlastet ist. Dies bedeutet, dass die für das Wegklappen der Dachhaube 2.1 benötigten Kräfte in beiden Richtungen zunächst durch die Drehstabfeder unterstützt werden, so dass der Kraftaufwand begrenzt bleibt.

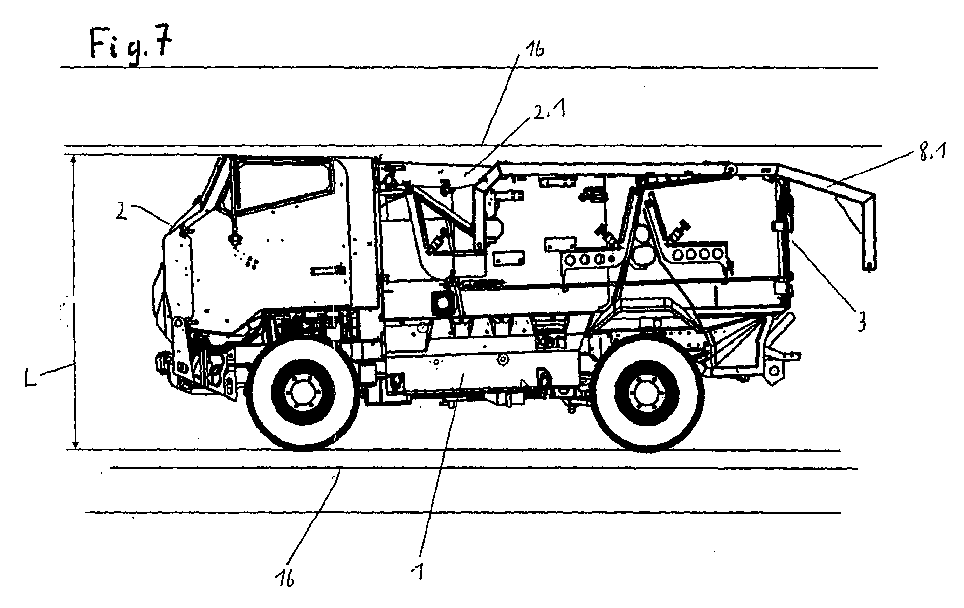

Wie aus den Fig. 6C und 6D ersichtlich, kann mit der Kombination der Maßnahmen Zurückklappen der Überroll-Schutzeinrichtung und Zurückklappen der Dachhaube der Fahrerkabine die Höhe des militärischen Kraftfahrzeugs deutlich verringert werden. Wie Fig. 7 zeigt, kann die Verladehöhe auf L = 1.890 mm begrenzt werden, und dies eröffnet die Möglichkeit, das Kraftfahrzeug in einen Hubschrauber beispielsweise vom Typ CH 53 zu verladen. In Fig. 7 ist die Kontur 17 des Laderaums eines Hubschraubers CH 53 schematisch eingezeichnet, und die Abbildung zeigt, dass das Kraftfahrzeug im Verladezustand in den Innenraum dieses Hubschraubers eingebracht werden kann.

## Patentansprüche

1. Militärisches Kraftfahrzeug zum Mannschaftstransport mit einem Fahrgestell, auf dem hintereinander eine Fahrerkabine und ein nach oben offener, mit einer Plane abdeckbarer Transportaufbau zur Aufnahme einer Mannschaft angeordnet sind, wobei im Transportaufbau mehrere Sitze und/oder Sitzbänke angeordnet sind und an der Oberseite des Transportaufbaus eine Überroll-Schutzeinrichtung angeordnet ist, **dadurch gekennzeichnet, dass** die Überroll-Schutzeinrichtung zwei jeweils über einer Seitenwand (3.1, 3.2) des Transportaufbaus (3) angeordnete, sich in Längsrichtung über die gesamte Länge des Transportaufbaus (3) erstreckende Überrollbügel (8.1, 8.2) aufweist, wobei die beiden Enden jedes Überrollbügels (8.1, 8.2) lösbar mit dem Transportaufbau (3) verriegelt sind und die beiden Überrollbügel (8.1, 8.2) durch quer zur Längsrichtung verlaufende Versteifungselemente (9.1, 9.2, 10) miteinander verbunden sind.

2. Kraftfahrzeug nach Anspruch 1, **dadurch gekennzeichnet, dass** mindestens eines der Versteifungselemente als fest mit den beiden Überrollbügeln (8.1, 8.2) verbundene Querstrebe (9.1, 9.2) ausgebildet ist.

3. Kraftfahrzeug nach Anspruch 2, **dadurch gekennzeichnet, dass** die feste Querstrebe (9.1, 9.2) im Bereich der vorderen und/oder hinteren Enden der Überrollbügel (8.1, 8.2) angeordnet ist.

4. Kraftfahrzeug nach Anspruch 3, **dadurch gekennzeichnet, dass** mindestens eine feste Querstrebe (9.1) über Befestigungselemente (4.2, 5.2) mit um horizontale Schwenkachsen (13.1, 13.2) abklappbaren Rückenlehnen oder Rückenlehnenoberteilen (4.1, 5.1) von im vorderen Bereich des Transportaufbaus (3) angeordneten Sitzen (4, 5) verbunden ist.

5. Kraftfahrzeug nach einem der Ansprüche 1 bis 4, **dadurch gekennzeichnet, dass** mindestens eines der Versteifungselemente als über Drehgelenke (10.1, 10.2) mit den Überrollbügeln (8.1, 8.2) verbundene Querstrebe (10) ausgebildet ist, die fest mit Schwingen (11.1 bis 11.3) verbunden ist, welche um horizontal angeordnete Schwenkachsen (12) schwenkbar sind.

6. Kraftfahrzeug nach Anspruch 5, **dadurch gekennzeichnet, dass** die Schwingen (11.1 bis 11.3) in Rückenlehnen von mindestens zwei nebeneinander angeordneten Sitzen oder die Oberteile (6.1 bis 6.3) der Rückenlehne einer Sitzbank (16) integriert sind, wobei die Rückenlehnen bzw. die Rückenlehnenoberteile um die horizontal angeordneten Schwenkachsen (12) aus einer verriegelbaren Position in eine verkippte Position schwenkbar sind.

7. Kraftfahrzeug nach einem der Ansprüche 5 oder 6, **dadurch gekennzeichnet, dass** die über Drehgelenke (10.1, 10.2) mit den Überrollbügeln (8.1, 8.2) verbundene Querstrebe (10) zwischen den fest mit den Überrollbügeln verbundenen Querstreben (9.1, 9.2) angeordnet ist.

8. Kraftfahrzeug nach Anspruch 5, **dadurch gekennzeichnet, dass** in einem vorgegebenen Abstand hinter einer ersten über Drehgelenke mit den Überrollbügeln verbundenen Querstrebe eine zweite über Drehgelenke mit den Überrollbügeln verbundene Querstrebe angeordnet ist, die fest mit Schwingen verbunden ist, welche um horizontal angeordnete Schwenkachsen schwenkbar sind.

9. Kraftfahrzeug nach Anspruch 8, **dadurch gekennzeichnet, dass** auch die Schwingen der zweiten über Drehgelenke mit den Überrollbügeln verbundenen Querstrebe in Rückenlehnen von mindestens zwei nebeneinander angeordneten Sitzen oder die Rückenlehne einer Sitzbank integriert sind, wobei jeweils mindestens das Oberteil dieser Rückenlehnen bzw. Rükkenlehne um die horizontalen Schwenkachsen aus einer verriegelbaren aufrechten Position in eine verkippte Position schwenkbar sind.

10. Kraftfahrzeug nach einem der Ansprüche 1 bis 9, **dadurch gekennzeichnet, dass** der Transportaufbau (3) mindestens an seiner Vorderseite mit den Überrollbügeln (8.1, 8.2) verbundene Diagonalaussteifungen aufweist.

11. Kraftfahrzeug nach Anspruch 10, **dadurch gekennzeichnet, dass** die Diagonalaussteifungen durch diagonal im Querschnitt des Transportaufbaus (3) geführte Seile oder Gurte (14) ausgebildet sind.

12. Kraftfahrzeug nach Anspruch 6 und gegebenenfalls Anspruch 9, **dadurch gekennzeichnet, dass** mindestens ein Teil der Rückenlehnen der Sitze (4, 5) und/oder der Sitzbänke (6, 7) mit in sie integrierten Nackenstützen eine tragende Funktion für die Quersteifigkeit der Überroll-Schutzeinrichtung besitzen.

13. Kraftfahrzeug nach einem der Ansprüche 1 bis 12, **dadurch gekennzeichnet, dass** die Fahrerkabine (2) eine Dachhaube (2.1) besitzt, die um an der Rückwand der Fahrerkabine angeordnete Scharniere (2.2) um mindestens 180° nach hinten zwischen die Bordwände des Transportaufbaus (3) wegklappbar ist.

14. Kraftfahrzeug nach Anspruch 13, **dadurch gekennzeichnet, dass** zur Unterstützung der Öffnungs- und Schließbewegung der Dachhaube (2.1) eine Drehstabfeder dient, deren Vorspannung so eingestellt ist, dass sie bei einem Öffnungswinkel von ca. 90° der Dachhaube (2.1) entlastet ist.

15. Kraftfahrzeug nach einem der Ansprüche 1 bis 14, **dadurch gekennzeichnet, dass** die Sitze (4, 5) bzw. Sitzbänke (6, 7) keine Befestigung zum Boden des Transportaufbaus (3) aufweisen.

16. Kraftfahrzeug nach Anspruch 15, **dadurch gekennzeichnet, dass** die Sitzbänke (6, 7) selbsttragend ausgebildet sind.

17. Kraftfahrzeug nach Anspruch 15 oder 16, **dadurch gekennzeichnet, dass** die Sitzbänke (6, 7) derart ausgebildet sind, dass sie einen unter ihnen angeordneten Stauraum für Ladungsteile (17.1, 17.2) begrenzen.

## Claims

1. Military motor vehicle for transporting personnel comprising a chassis, on which a driver's cabin and an upwardly open transport structure coverable with a tarpaulin for accommodating personnel are disposed one behind the other, wherein in the transport structure a plurality of seats and/or bench-seats are disposed and on the top of the transport structure a roll-over protection device is disposed, **characterized in that** the roll-over protection device comprises two roll bars (8.1, 8.2) disposed in each case above a side wall (3.1, 3.2) of the transport structure (3) and extending in longitudinal direction over the entire length of the transport structure (3), wherein the two ends of each roll bar (8.1, 8.2) are releasably latched to the transport structure (3) and the two roll bars (8.1, 8.2) are connected to one another by reinforcing elements (9.1, 9.2, 10) extending transversely of the longitudinal direction.

2. Motor vehicle according to claim 1, **characterized in that** at least one of the reinforcing elements takes the form of a transverse strut (9.1, 9.2) connected in a fixed manner to the two roll bars (8.1, 8.2).

3. Motor vehicle according to claim 2, **characterized in that** the fixed transverse strut (9.1, 9.2) is disposed in the region of the front and/or rear ends of the roll bars (8.1, 8.2).

4. Motor vehicle according to claim 3, **characterized in that** at least one fixed transverse strut (9.1) is connected by fastening elements (4.2, 5.2) to backrests, which are foldable downwards about horizontal swivelling axes (13.1, 13.2), or to backrest top parts (4.1, 5.1) of seats (4, 5) disposed in the front region of the transport structure (3).

5. Motor vehicle according to one of claims 1 to 4, **characterized in that** at least one of the reinforcing elements takes the form of a transverse strut (10), which is connected by hinges (10.1, 10.2) to the roll bars (8.1, 8.2) and is connected in a fixed manner to rockers (11.1 to 11.3), which are pivotable about horizontally disposed swivelling axes (12).

6. Motor vehicle according to claim 5, **characterized in that** the rockers (11.1 to 11.3) are integrated into backrests of at least two seats disposed side by side or into the top parts (6.1 to 6.3) of the backrest of a bench-seat (16), wherein the backrests and/or the backrest top parts are pivotable about the horizontally disposed swivelling axes (12) from a latchable position into a tilted position.

7. Motor vehicle according to one of claims 5 or 6, **characterized in that** the transverse strut (10) connected by hinges (10.1, 10.2) to the roll bars (8.1, 8.2) is disposed between the transverse struts (9.1, 9.2) connected in a fixed manner to the roll bars.

8. Motor vehicle according to claim 5, **characterized in that** disposed at a defined distance behind a first transverse strut connected by hinges to the roll bars is a second transverse strut, which is connected by hinges to the roll bars and is connected in a fixed manner to rockers, which are pivotable about horizontally disposed swivelling axes.

9. Motor vehicle according to claim 8, **characterized in that** the rockers of the second transverse strut connected by hinges to the roll bars are likewise integrated into backrests of at least two seats disposed side by side or into the backrest of a bench-seat, wherein in each case at least the top part of said backrests and/or backrest are pivotable about the horizontal swivelling axes from a latchable upright position into a tilted position.

10. Motor vehicle according to one of claims 1 to 9, **characterized in that** the transport structure (3) at least at its front comprises diagonal reinforcing elements connected to the roll bars (8.1, 8.2).

11. Motor vehicle according to claim 10, **characterized in that** the diagonal reinforcing elements are formed by ropes or belts (14) running diagonally in cross section of the transport structure (3).

12. Motor vehicle according to claim 6 and optionally claim 9, **characterized in that** at least some of the backrests of the seats (4, 5) and/or bench-seats (6, 7) by means of headrests integrated therein have a load-bearing function for the transverse stiffness of the roll-over protection device.

13. Motor vehicle according to one of claims 1 to 12, **characterized in that** the driver's cabin (2) has a roof hood (2.1), which may be folded away rearwards between the side-boards of the transport structure (3) through at least 180° about hinges (2.2) that are disposed on the rear wall of the driver's cabin.

14. Motor vehicle according to claim 13, **characterized in that** the opening and closing movement of the roof hood (2.1) is assisted by means of a torsion bar, which has a bias adjusted in such a way that it is relieved, given an opening angle of ca. 90° of the roof hood (2.1).

15. Motor vehicle according to one of claims 1 to 14, **characterized in that** the seats (4, 5) and/or bench-seats (6, 7) have no fastening in the direction of the floor of the transport structure (3).

16. Motor vehicle according to claim 15, **characterized in that** the bench-seats (6, 7) are of a self-supporting design.

17. Motor vehicle according to claim 15 or 16, **characterized in that** the bench-seats (6, 7) are designed in such a way that they delimit a stowage area disposed beneath them for load parts (17.1, 17.2).

## Revendications

1. Véhicule automobile militaire pour le transport de troupe, comportant un châssis, sur lequel sont disposées l'une derrière l'autre, une cabine du conducteur et une plate-forme de transport carrossée ouverte vers le haut, avec une bâche débâchable, sur laquelle prend place un groupe, tandis que sur la plate-forme de transport carrossée sont disposés plusieurs sièges et/ou banquettes et sur la face supérieure de la plate-forme de transport carrossée est agencé un dispositif de protection contre le retournement, **caractérisé en ce que** le dispositif de protection contre le retournement comporte respectivement deux arceaux de sécurité (8.1, 8.2) qui sont disposés au-dessus d'une paroi latérale (3.1, 3.2) de la plate-forme de transport carrossée (3) et s'étendent dans le sens longitudinal sur toute la longueur de la plate-forme de transport carrossée (3), tandis que les deux extrémités de chaque arceau de sécurité (8.1, 8.2) sont verrouillées de manière amovible avec la plate-forme de transport carrossée (3) et les deux arceaux de sécurité (8.1, 8.2) sont reliés l'un à l'autre par l'intermédiaire d'éléments de renforcement (9.1, 9.2, 10) disposés perpendiculairement au sens longitudinal.

2. Véhicule automobile selon la revendication 1, **caractérisé en ce qu'**au moins un des éléments de renforcement est réalisé sous la forme d'une traverse (9.1, 9.2) assemblée de manière fixe aux deux arceaux de sécurité (8.1, 8.2).

3. Véhicule automobile selon la revendication 2, **caractérisé en ce que** la traverse (9.1, 9.2) fixe est disposée dans la zone de l'extrémité avant et/ou arrière des arceaux de sécurité (8.1, 8.2).

4. Véhicule automobile selon la revendication 3, **caractérisé en ce qu'**au moins une traverse (9.1) fixe est assemblée par l'intermédiaire d'éléments de renforcement (4.2, 5.2) à des dossiers rabattables autour d'axes de pivotement (13.1, 13.2) horizontaux ou à des parties supérieures de dossiers (4.1, 5.1) de sièges (4, 5) disposés dans la zone avant de la plate-forme de transport carrossée (3).

5. Véhicule automobile selon l'une quelconque des revendications 1 à 4, **caractérisé en ce qu'**au moins un des éléments de renforcement est réalisé sous la forme d'une traverse (10) qui est assemblée au moyen d'articulations rotatives (10.1, 10.2) aux arceaux de sécurité (8.1, 8.2) et qui est assemblée de manière fixe à des bielles oscillantes (11.1 à 11.3) qui peuvent pivoter autour d'axes de pivotement (12) disposés horizontalement.

6. Véhicule automobile selon la revendication 5, **caractérisé en ce que** les bielles oscillantes (11.1 à 11.3) sont intégrées dans les dossiers d'au moins deux sièges disposés côte à côte ou dans les parties supérieures (6.1 à 6.3) du dossier d'une banquette (16), les dossiers et les parties supérieures de dossier pouvant pivoter autour des axes de pivotement (12) disposés horizontalement hors d'une position verrouillée dans une position basculée.

7. Véhicule automobile selon l'une quelconque des revendications 5 ou 6, **caractérisé en ce que** la traverse (10) assemblée aux arceaux de sécurité (8.1, 8.2) au moyen d'articulations rotatives (10.1, 10.2) est disposée entre les traverses (9.1, 9.2) qui sont assemblées de manière fixe aux arceaux de sécurité (8.1, 8.2).

8. Véhicule automobile selon la revendication 5, **caractérisé en ce que**, à une distance prédéfinie derrière une première traverse assemblée au moyen d'articulations rotatives aux arceaux de sécurité, est disposée une deuxième traverse assemblée au moyen d'articulations rotatives aux arceaux de sécurité, laquelle est assemblée de manière fixe à des bielles oscillantes qui peuvent pivoter autour d'axes de pivotement disposés horizontalement.

9. Véhicule automobile selon la revendication 8, **caractérisé en ce que** les bielles oscillantes de la deuxième traverse assemblée au moyen d'articulations rotatives aux arceaux de sécurité sont également intégrées dans les dossiers d'au moins deux sièges disposés côte à côte ou dans le dossier d'une banquette, tandis qu'au moins la partie supérieure respective de ces dossiers de siège et du dossier de banquette peuvent pivoter autour des axes de pivotement (12) disposés horizontalement, hors d'une position verrouillée dans une position basculée.

10. Véhicule automobile selon l'une quelconque des revendications 1 à 9 **caractérisé en ce que** la plate-forme de transport carrossée (3) comporte au moins sur son côté avant des renforts en diagonale assemblés aux arceaux de sécurité (8.1, 8.2).

11. véhicule automobile selon la revendication 10, **caractérisé en ce que** les renforts en diagonale sont réalisés par des cordes ou des sangles (14) disposées en diagonale dans la section transversale de la plate-forme de transport carrossée (3).

12. Véhicule automobile selon la revendication 6 et le cas échéant selon la revendication 9, **caractérisé en ce qu'**au moins une partie des dossiers des sièges (4, 5) et/ou des banquettes (6, 7) comportant des appui-têtes intégrés dans ceux-ci ont une fonction de support pour la rigidité transversale du dispositif de protection contre le retournement.

13. Véhicule automobile selon l'une quelconque des revendications 1 à 12, **caractérisé en ce que** la cabine du conducteur (2) comporte un pavillon (2.1) qui peut être rabattu d'au moins 180° vers l'arrière autour de charnières (2.2) agencées sur la paroi arrière de la cabine du conducteur entre les ridelles de la plate-forme de transport carrossée (3)

14. Véhicule automobile selon la revendication 13, **caractérisé en ce qu'**en vue de favoriser le mouvement d'ouverture et de fermeture du pavillon (2.1), il est prévu un ressort à barre de torsion, dont la précontrainte est réglée de telle sorte que celle-ci est supprimée lorsque l'angle d'ouverture du pavillon (2.1) est d'environ 90°.

15. Véhicule automobile selon l'une quelconque des revendications 1 à 14, **caractérisé en ce que** les sièges (4, 5) et les banquettes (6, 7) ne comportent pas de fixations sur le fond de la plate-forme de transport carrossée (3).

16. Véhicule automobile selon la revendication 15, **caractérisé en ce que** les banquettes (6, 7) sont des banquettes autoporteuses.

17. Véhicule automobile selon la revendication 15 ou 16, **caractérisé en ce que** les banquettes (6, 7) sont réalisées de telle sorte qu'elles délimitent un compartiment de rangement de pièces d'équipements (17.1, 17.2).
